# EUROPÄISCHE PATENTSCHRIFT

(11) **EP 0 749 890 B1**
(45) Veröffentlichungstag und Bekanntmachung des Hinweises auf die Patenterteilung: **04.08.1999**
(21) Anmeldenummer: 96107130.5
(22) Anmeldetag: 07.05.1996
(51) Int. Cl.: B62D 25/02

(54) **Selbsttragende Rohbaustruktur für ein Kraftfahrzeug sowie Verfahren zu ihrer Herstellung**
Monocoque construction body-in-white for a motor vehicle and procedure for its manufacturing
Structure de carrosserie autoporteuse pour un véhicule à moteur et procédé de sa fabrication

(30) Priorität: 22.06.1995 DE 19522680
(43) Veröffentlichungstag der Anmeldung: 27.12.1996
(73) Patentinhaber: DaimlerChrysler AG, 70567 Stuttgart (DE)
(72) Erfinder: Seefried, Johann, 72184 Eutingen (DE); Wendler, Roland, 71034 Böblingen (DE)

(56) Entgegenhaltungen:
- DE-A- 2 712 084
- US-A- 5 246 264

## Beschreibung

Die Erfindung betrifft eine selbsttragende Rohbaustruktur für ein Kraftfahrzeug mit einem Unterbau sowie mit den Unterbau seitlich flankierenden Seitenwänden, die mit Verstärkungen versehen sind, sowie ein verfahren zur Herstellung der Rohbaustruktur.

Aus der DE-OS 27 12 084 ist es bekannt, eine selbsttragende Fahrzeugkarosseriestruktur mit Seitenwandbaugruppen zu versehen, wobei jede Seitenwandbaugruppe ein sich über nahezu die gesamte Fahrzeuglänge erstreckendes Außenblech aufweist, das an ein einteiliges Innenblech angebunden ist, das teilweise die Schließbleche für die A-, B- und C-Säule bildet. Zur vollständigen Herstellung der Seitenwandbaugruppe werden noch zusätzliche Blechteile benötigt. Verstärkungen innerhalb jeder Seitenwandbaugruppe sind nicht vorgesehen.

Bei neueren Kraftfahrzeugen ist es bekannt, zur Verstärkung der Fahrzeugstruktur im Seitenwandbereich an den relevanten Stellen Verstärkungsbleche oder -schotte einzusetzen. Abhängig von den Anforderungen für das Kraftfahrzeug wird eine Vielzahl von Verstärkungsblechen und -schotten benötigt.

Aufgabe der Erfindung ist es, eine Rohbaustruktur sowie ein Verfahren der eingangs genannten Art zu schaffen, mittels derer mit geringem Herstellungsaufwand eine Verstärkung der Seitenwände ermöglicht wird.

Für die selbsttragende Rohbaustruktur wird diese Aufgabe dadurch gelöst, daß die Verstärkungen in jeder Seitenwand in Form eines gemeinsamen, einstückigen Integralbauteiles ausgebildet sind, das zwischen einer Außenhaut und einer Innenhaut jeder Seitenwand eingefügt ist. Dieses eine Integralverstärkung darstellende Integralbauteil kann je nach Erfordernissen und Herstellbarkeit aus ein- oder mehrteiligen Platinen hergestellt sein oder auch aus mehreren Einzelteilen zusammengefügt sein. Insbesondere im Bereich des vorderen Türausschnittes weist jede Seitenwand eine Vielzahl von Verstärkungen auf, die in einfacher Weise zu dem einstückigen Integralbauteil zusammengefaßt werden. Teil dieses Integralbauteiles ist auch ein Schließblech für den Türschweller, dessen Profil durch einen Schwellerbereich der äußeren Seitenwandhälfte gebildet wird. Die Anzahl der Einzelteile wird durch die erfindungsgemäße Lösung erheblich reduziert, wodurch der Logistik- und Steuerungsaufwand für die Herstellung der Rohbaustruktur sinkt. Somit können auch Fügestellen zwischen den einzelnen Verstärkungen entfallen, so daß sich eine reduzierte Anzahl von Schweißpunkten im Seitenwandbereich ergibt. Da die einzelnen Verstärkungen nunmehr aufgrund ihrer Zusammenfügung in dem einstückigen Integralbauteil keine Anbindungsflansche mehr aufweisen müssen, ergibt sich auch eine deutliche Gewichtsreduzierung. Herstellungstoleranzen werden durch diesen einfachen Aufbau reduziert. Diese Integralverstärkung ist dabei sowohl für einen konventionellen Seitenwandaufbau als auch für den Aufbau der Seitenwand aus zwei vorab einstückig zusammengefügten Seitenwandhälften geeignet.

In Ausgestaltung der Erfindung ist jede Seitenwand aus einer einstückig zusammengefügten inneren Seitenwandhälfte und einer korrespondierend profilierten äußeren Seitenwandhälfte zusammengesetzt, zwischen die das Integralbauteil eingebunden ist. Dadurch ergibt sich ein besonders einfacher Aufbau, der einen wesentlich verringerten Herstellungs- und Montageaufwand gewährleistet.

In weiterer Ausgestaltung der Erfindung ist das Integralbauteil als einen Türausschnitt der Seitenwandhälften ringartig umgebende Integralverstärkung gestaltet. Dadurch wird insbesondere der Bereich des Türausschnittes erheblich verstärkt, wodurch sich insbesondere eine erhöhte Stabilität der Rohbaustruktur ergibt.

Für das Verfahren zur Herstellung der Rohbaustruktur wird die Aufgabe dadurch gelöst, daß die Verstärkungen vor dem Zusammensetzen der inneren und äußeren Seitenwandhälften als gemeinsames, einstückiges Integralbauteil hergestellt werden und anschließend das Integralbauteil entweder an die innere oder an die äußere Seitenwandhälfte angefügt wird. Dadurch wird eine wesentlich vereinfachte Aufbaufolge der Rohbaustruktur erzielt, die eine wesentliche Reduzierung der Herstellungskosten mit sich bringt.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt in einer perspektivischen Darstellung einen Unterbau sowie eine innere Seitenwandhälfte einer Ausführungsform einer erfindungsgemäßen Rohbaustruktur,
- Fig. 2: einen Aufbaufolgeschritt zur Herstellung der Rohbaustruktur gemäß Fig. 1, bei dem eine äußere Seitenwandhälfte an eine bereits mit dem Unterbau verbundene innere Seitenwandhälfte angefügt wird, wobei an die äußere Seitenwandhälfte eine Integralverstärkung für einen vorderen Türausschnitt angebunden ist, und
- Fig. 3: in einer Explosionsdarstellung die verschiedenen Einzelteile der Seitenwandbaugruppe der Rohbaustruktur gemäß den Fig. 1 und 2.

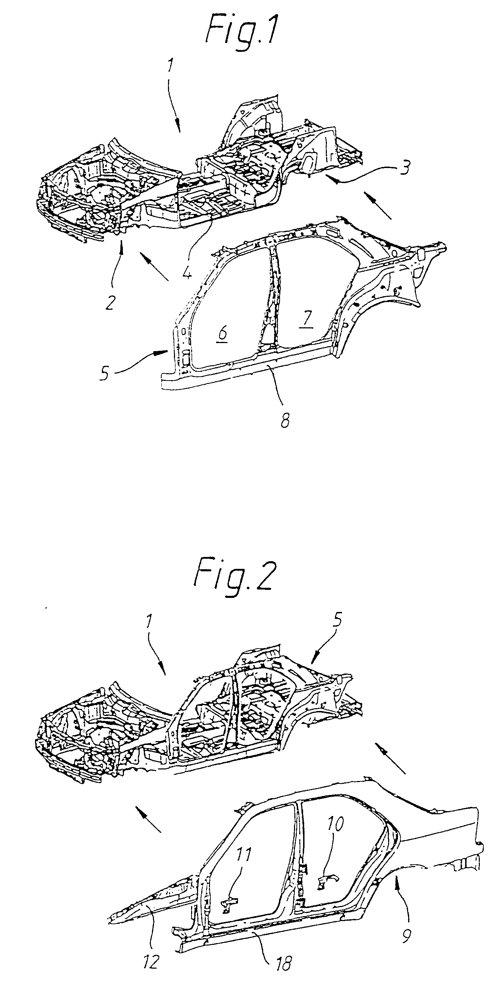

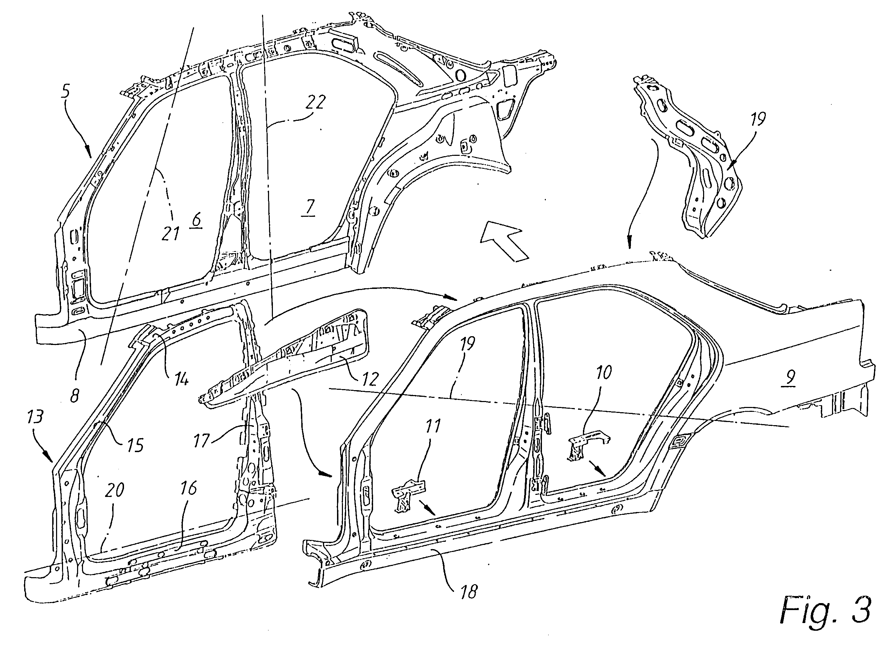

Eine Rohbaustruktur für einen Personenkraftwagen weist gemäß Fig. 1 eine Unterbaugruppe (1) auf, die mit einem Unterboden (4) versehen ist. An den Unterboden (4) schließt in Fahrzeuglängsrichtung nach vorne eine Stirnwand (2) an, nach hinten anschließend sind die Innenteile der Radkästen (3) vorgesehen. Im Anschluß an die Stirnwand (2) nach vorne sind an der Unterbaugruppe (1) bereits Innenteile der oberen Längsträger angeordnet, die durch nachfolgend näher beschriebene Längsträgerprofile (12) ergänzt werden. Von der Seite her wird an die Unterbaugruppe (1) eine einstückige innere Seitenwandhälfte (5) angesetzt, durch die ein vorderer Türausschnitt (6) sowie ein hinterer Türausschnitt (7) gebildet wird. Die innere Seitenwandhälfte (5) weist einen inneren Profilteil (8) für einen Türschweller sowie die entsprechenden Profilteile für eine A-Säule, eine B-Säule und eine C-Säule auf. Außerdem wird durch die innere Seitenwandhälfte (5) der innere Profilteil des seitlichen Dachrahmens gebildet. Die innere Seitenwandhälfte (5) wird durch Punktschweißung an die Unterbaugruppe (1) angefügt. Im Bereich der hinteren Radkästen (3) bildet jede innere Seitenwandhälfte (5) einen Radkastenabschluß. Selbstverständlich wird auf jeder Seite an die Unterbaugruppe (1) eine innere Seitenwandhälfte (5) angesetzt, auch wenn in Fig. 1 lediglich die in Fahrtrichtung linke Seitenwandhälfte (5) dargestellt ist. Die innere Seitenwandhälfte (5) ist einstückig aus einer dreiteiligen halbgeschweißten Platine zusammengefügt, deren Trennlinien entlang der strichpunktiert dargestellten Linien (21 und 22) (Fig. 3) verlaufen.

In einem weiteren Aufbaufolgeschritt wird eine äußere Seitenwandhälfte (9) an jede innere Seitenwandhälfte (5) in Pfeilrichtung (Fig. 2) angesetzt, wobei zuvor gemäß Fig. 3 an die äußere Seitenwandhälfte (9) eine nachfolgend näher beschriebene Integralverstärkung (13) sowie das Längsträgerprofil (12) angefügt wurden. Die äußere Seitenwandhälfte (9) ist als einstückiges Bauteil aus einer zweiteiligen Platine hergestellt, wobei die Trennebene der beiden Platinenteile entlang der strichpunktierten Linie (19) schräg durch die Seitenwandhälfte (9) hindurch verläuft. Die beiden äußeren Seitenwandhälften (9) weisen die korrespondierenden Profilelementhälften zu den inneren Seitenwandhälften (5) auf, die als Beplankung jeder inneren Seitenwandhälfte (5) dienen und diese nach außen abschließen. Die äußere Seitenwandhälfte (9) weist insbesondere einen Schwellerbereich (18) auf, der sich unterhalb der beiden Türausschnitte in Fahrzeuglängsrichtung erstreckt und ein offenes Hohlprofil darstellt, das das Schwellerprofil (8) der inneren Seitenwandhälfte (5) ergänzt.

An die äußere Seitenwandhälfte (9) wird das ergänzende Längsträgerprofil (12) angeschweißt, bevor die äußere Seitenwandhälfte (9) an die innere Seitenwandhälfte (5) angefügt wird. Bei dem Anfügen der äußeren Seitenwandhälften (9) an die inneren Seitenwandhälften (5) werden zudem eine vordere Wagenheberkonsole (11) und eine hintere Wagenheberkonsole (10) zwischen die beiden Seitenwandhälften (5, 9) mit eingebunden.

Zur Verstärkung der Säulen- und Schwellerbereiche auf Höhe des vorderen Türausschnitts (6) ist eine ringartig den Türausschnitt (6) umgebende Integralverstärkung (13) vorgesehen, die als einstückiges Blechbauteil, beim Ausführungsbeispiel aus einer zweigeteilten Platine, hergestellt ist. Die Trennebene der Platine verläuft entlang der Linie (20) in Fig. 3. Die Integralverstärkung (13) wird beim dargestellten Ausführungsbeispiel vor dem Anbringen der äußeren Seitenwandhälfte (9) an die innere Seitenwandhälfte (5) an die Innenseite der äußeren Seitenwandhälften (9) derart angebracht, daß die korrespondierenden Türausschnittbereiche miteinander fluchten. Durch die Integralverstärkung (13) wird insbesondere eine Verstärkung für den A-Säulenbereich (15), für den Dachrahmenbereich (14), für den B-Säulenbereich (17) und für den Schwellerbereich (16) geschaffen, die allesamt den vorderen Türausschnitt (6) umschließen. Die Seitenwandgruppe weist zusätzlich eine C-Säulenverstärkung (19) auf, die im C-Säulenbereich von der Innenseite her an die äußere Seitenwandhälfte (9) angebunden wird. Die solchermaßen verstärkte äußere Seitenwandhälfte (9) wird nun in Pfeilrichtung an die innere Seitenwandhälfte angesetzt und mit dieser verschweißt. Dadurch wird mit relativ wenigen Einzelteilen eine äußerst stabile Seitenwandgruppe geschaffen, die in einfacher Weise herstellbar ist. Aufgrund der guten Ausrichtbarkeit der einzelnen Teile der Seitenwandgruppe relativ zueinander ist es möglich, die Seitenwandgruppe nahezu toleranzfrei an die Unterbaugruppe (1) anzufügen.

## Patentansprüche

1. Selbsttragende Rohbaustruktur für ein Kraftfahrzeug mit einem Unterbau sowie mit zwei den Unterbau seitlich flankierenden Seitenwänden, die mit Verstärkungen versehen sind,
**dadurch gekennzeichnet,**
daß die Verstärkungen (14, 15, 16, 17) in jeder Seitenwand in Form eines gemeinsamen, einstückigen Integralbauteiles (13) ausgebildet sind, das zwischen einer Außenhaut und einer Innenhaut jeder Seitenwand eingefügt ist.

2. Rohbaustruktur nach Anspruch 1,
**dadurch gekennzeichnet,**
daß jede Seitenwand aus einer einstückig zusammengefügten inneren Seitenwandhälfte (5) und einer korrespondierend profilierten äußeren Seitenwandhälfte (9) zusammengesetzt ist, zwischen die das Integralbauteil (13) eingebunden ist.

3. Rohbaustruktur nach Anspruch 1 oder 2,
**dadurch gekennzeichnet,**
daß das Integralbauteil (13) als einen Türausschnitt (6) der Seitenwandhälften (5, 9) ringartig umgebende Integralverstärkung (13) gestaltet ist.

4. Verfahren zur Herstellung einer Rohbaustruktur nach einem der Ansprüche 1 bis 3,
**dadurch gekennzeichnet,**
daß die Verstärkungen (14, 15, 16, 17) vor dem Zusammensetzen der inneren und äußeren Seitenwandhälften (5, 9) als gemeinsames, einstückiges Integralbauteil (13) hergestellt werden und anschließend das Integralbauteil (13) entweder an die innere oder an die äußere Seitenwandhälfte (5; 9) angefügt wird.

5. Verfahren nach Anspruch 4,
**dadurch gekennzeichnet,**
daß das Integralbauteil (13) nach dem Anbinden der inneren Seitenwandhälfte (5) an den Unterbau (1) an die innere oder die äußere Seitenwandhälfte (5; 9) angefügt wird.

## Claims

1. A self-supporting carcase structure for a motor vehicle with a substructure and with, flanking the sides of the substructure, two side walls which are provided with reinforcements, characterised in that the reinforcements (14, 15, 16, 17) are constructed in each side wall in the form of one common one-piece integral component (13) which is incorporated between an outer skin and an inner skin of each side wall.

2. A carcase structure according to claim 1, characterised in that each side wall is composed of an integrally joined inner side wall half (5) and a correspondingly profiled outer side wall half (9) between which the integral component (13) is bonded.

3. A carcase structure according to claim 1 or 2, characterised in that the integral component (13) is constructed as an integral reinforcement (13) which surrounds a door aperture (6) in the side wall halves (5, 9) like a ring.

4. A method of producing a carcase structure according to one of claims 1 to 3, characterised in that the reinforcements (14, 15, 16, 17) are produced as one common one-piece integral component (13) prior to assembly of the inner and outer side wall halves (5, 9) and in that the integral component (13) is then joined either to the inner or to the outer side wall half (5, 9).

5. A method according to claim 4, characterised in that the integral component (13) is connected to the inner or outer side wall half (5, 9) after the inner side wall half (5) has been joined to the substructure (1).

## Revendications

1. Structure de carrosserie autoporteuse pour un véhicule automobile, comprenant un soubassement, ainsi que deux parois latérales placées latéralement d'un côté et de l'autre du soubassement et pourvues de renforcements,
caractérisée en ce que les renforcements (14, 15, 16, 17) dans chaque paroi latérale sont réalisés sous la forme d'un composant intégré (13) commun, d'un seul tenant, qui est intercalé entre un revêtement extérieur et un revêtement intérieur de chaque paroi latérale.

2. Structure de carrosserie selon la revendication 1, caractérisée en ce que chaque paroi latérale est composée d'une demi-paroi latérale intérieure (5), réalisée d'un seul tenant par l'assemblage de plusieurs pièces, et d'une demi-paroi latérale extérieure (9) profilée de façon correspondante, entre lesquelles est fixé le composant intégré (13).

3. Structure de carrosserie selon la revendication 1 ou 2, caractérisée en ce que le composant intégré (13) est réalisé sous la forme d'un renforcement intégré (13) entourant à la façon d'un anneau une découpe de porte (6) des demi-parois latérales (5, 9).

4. Procédé de fabrication d'une structure de carrosserie selon une des revendications 1 à 3, caractérisé en ce que, avant de réunir les demi-parois latérales intérieure et extérieure (5, 9), on produit les renforcements (14, 15, 16, 17) comme un composant intégré (13) commun, d'un seul tenant, puis on joint le composant intégré (13) soit à la demi-paroi latérale intérieure (5) soit à la demi-paroi latérale extérieure (9).

5. Procédé selon la revendication 4, caractérisé en ce qu'on joint le composant intégré (13) à la demi-paroi latérale intérieure (5) ou à la demi-paroi latérale extérieure (9) après le raccordement de la demi-paroi latérale intérieure (5) au soubassement (1).
